# EUROPEAN PATENT SPECIFICATION

(11) **EP 2 927 544 B1**
(45) Date of publication and mention of the grant of the patent: **10.05.2017**
(21) Application number: 15160133.3
(22) Date of filing: 20.03.2015
(51) Int. Cl.: F16J 15/34

(54) **Cartridge for a mechanical seal for a centrifugal pump and mechanical seal comprising such cartridge**
KARTUSCHE FÜR EINE MECHANISCHE DICHTUNG FÜR EINE KREISELPUMPE UND MECHANISCHE DICHTUNG MIT SOLCH EINER KARTUSCHE
CARTOUCHE DESTINÉE À UN JOINT MÉCANIQUE POUR UNE POMPE CENTRIFUGE ET JOINT MÉCANIQUE COMPRENANT LADITE CARTOUCHE

(30) Priority: 26.03.2014 IT PD20140075
(43) Date of publication of application: 07.10.2015
(73) Proprietor: Dab Pumps S.p.A., 35035 Mestrino (Padova) (IT)
(72) Inventor: Macchioni, Paolo, 45038 POLESELLA RO (IT); Sinico, Francesco, 36075 MONTECCHIO MAGGIORE VI (IT); Luppi, Davide, 36045 LONIGO VI (IT)
(74) Representative: Modiano, Micaela Nadia

(56) References cited:
- WO-A1-2008/045087
- WO-A1-2009/074648
- US-A- 4 213 618
- US-A- 4 377 290
- US-A1- 2009 212 503
- US-B1- 6 186 510

## Description

The present invention relates to a cartridge for a mechanical seal for a centrifugal pump and to a mechanical seal comprising such cartridge.

As known, mechanical seals are complex items and are used where simple seals made of synthetic material are not sufficient to prevent a passage of liquid.

In the field of centrifugal pumps, it is now common to use mechanical seals to be fitted in the structure of the pump in order to ensure the hydraulic seal between the liquid pumping region and the dry region of the motor, by sealing substantially the passage of the rotating transmission shaft.

In the case of a mechanical seal of the cartridge type, it is possible to preassemble the item substantially by inserting the mechanical seal in the cartridge and then mounting the cartridge that supports the seal directly on the transmission shaft, in a chamber with lubricant that is interposed between the motor and the pump body, in order to ensure correct lubrication between the parts of the seal.

By installing the already-assembled mechanical cartridge seal in the pump structure, the possibilities of error in the positioning of the sealing rings are reduced and the maintenance operations of the pumping device are simplified with respect to the fitting of mechanical seals without a cartridge.

Currently, different types of double mechanical cartridge seals are known and usually comprise a jacket to be associated integrally with the rotating shaft and on which the sealing body is mounted, i.e., coaxially two sealing rings, one downstream of the other, which are separated by one or more springs and which slide in rotation on two other sealing rings that are integral with a cartridge; the cartridge is divided into two parts and contains the jacket and the sealing body and gaskets, typically of the O-ring type, are conveniently fitted thereon, in order to avoid seepages of lubricating fluid from the chamber in which the seal is accommodated.

The cartridge is in fact usually divided transversely (with respect to the axial direction of installation on the transmission shaft), substantially two half-shells, in order to allow the accommodation therein of the other components during the preassembly of the mechanical seal.

In order to render the jacket integral with the cartridge until the seal is installed on the transmission shaft, the two can be coupled for example by means of fixing screws. During installation it is necessary to fix the cartridge, at one of its connection flanges, to the structure of the pump, typically with fixing means such as screws or bolts, remove the screws in order to release the jacket from the cartridge, and insert transversely to the jacket (substantially in a radial direction with respect to the transmission shaft axis) fixing grub screws that render it rotationally integral with the shaft.

This solution is not devoid of drawbacks, such as the need to assemble numerous components and the consequent risk of incurring in alignment errors between the two sliding tracks of the sealing rings in rotation on the fixed ones that are integral with the cartridge, which can cause a passage of lubricating fluid outside the chamber.

Another drawback of the described solution lies in that the installation of the seal is not easy due to the need to unscrew the screws used to assemble the jacket to the cartridge and to insert the grub screws that couple the jacket to the shaft.

US 4 213 618 A discloses a self-contained rotary mechanical seal for mounting on a rotating shaft to form a seal between the shaft and a housing structure through which the shaft extends.

US 4377290 discloses a cartridge for a mechanical seal according to the preamble of claim 1. The aim of the present invention is to provide a mechanical cartridge seal that is capable of ensuring correct fitting of the seal, preventing errors and misalignment of the sealing rings.

Within this aim, an object of the invention is to facilitate and to quicken the installation of a mechanical cartridge seal on a pump structure.

In accordance with the invention, there is provided a cartridge for a mechanical seal for a centrifugal pump as defined in the appended claim 1, and a mechanical seal, comprising the cartridge of the appended claim 1, as defined in the appended claims 2-4.

Further characteristics and advantages of the invention will become better apparent from the description of a preferred but not exclusive embodiment of the cartridge and of the mechanical cartridge seal according to the invention, illustrated by way of non-limiting example in the accompanying drawings, wherein:
Figure 1 is a perspective view of the cartridge according to the invention;
Figure 2 is an exploded perspective view of the mechanical seal according to the invention;
Figure 3 is another exploded perspective view of the mechanical seal according to the invention;
Figure 4 is a sectional view of the mechanical seal according to the invention, assembled and in its application to a pump;
Figure 5 is a view of an enlarged-scale portion of the sectional view of Figure 4.

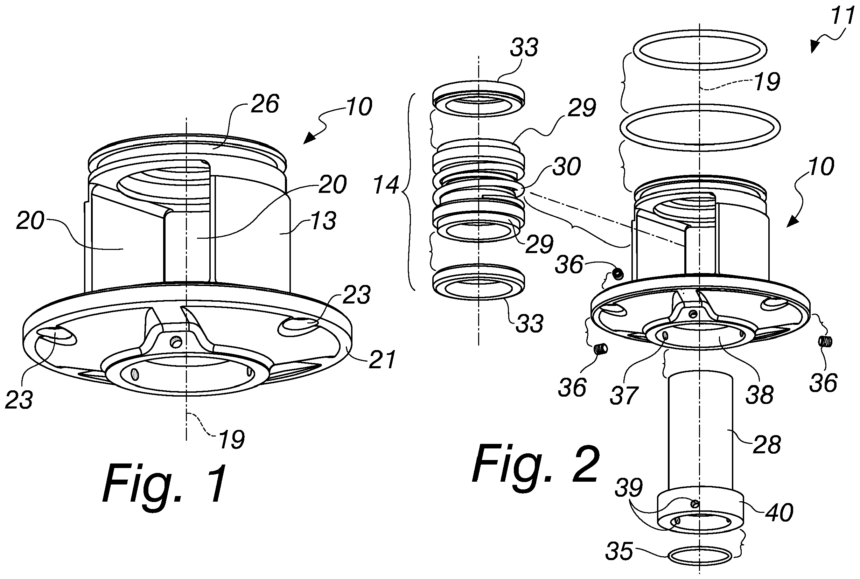

With reference to the figures, the cartridge according to the invention is shown individually in Figure 1 and is clearly visible in the exploded views of the two following figures, where it is designated by the reference numeral 10.

The cartridge 10 is designed to be assembled in a mechanical seal 11 for a centrifugal pump 12, so as to provide a so-called mechanical cartridge seal, according to the invention. The mechanical seal 11 is shown in Figure 2 and in the subsequent figures.

The cartridge 10 is made of metallic material and has conveniently a hollow body 13, which is adapted to accommodate a mechanical sealing body 14 by means of which it can be installed, so as to surround it, on a shaft 15 for transmitting the rotation from a motor 16 to a pump body 17.

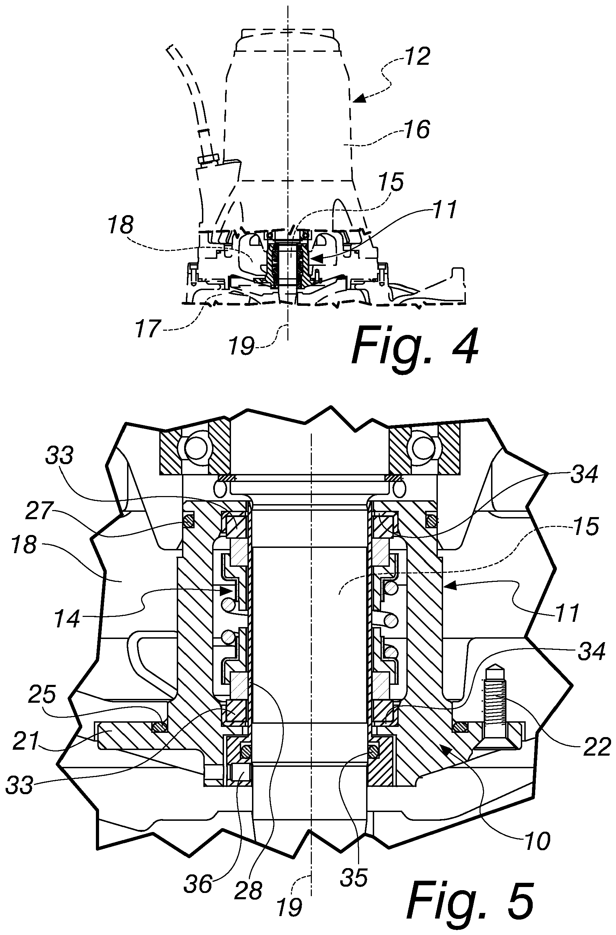

With respect to Figure 4, the structure of the centrifugal pump 12 has a chamber 18, which conveniently must contain lubricating fluid and in which the mechanical seal 11 is accommodated, separating the pump body 17, situated in the lower part, from the motor 16, in the upper part.

The hollow body 13 is extended around an axis 19 along which it is fitted with the other elements of the mechanical seal 11 on the shaft 15 for transmitting rotation. The axis 19, therefore, coincides with the rotation axis of the transmission shaft 15 when the mechanical seal is installed.

Advantageously, the hollow body 13 of the cartridge 10 has two mutually opposite lateral windows 20 for inserting therein, from one of the two, the mechanical sealing body 14 described hereinafter.

The cartridge 10 is provided conveniently with a flange 21, in the vicinity of one of its axial end portions, with which it is fixed to the pump body 17 by means of three fixing screws 22 to be inserted in specific fixing holes 23, in the manner shown in Figure 4, during the installation of the mechanical seal 11.

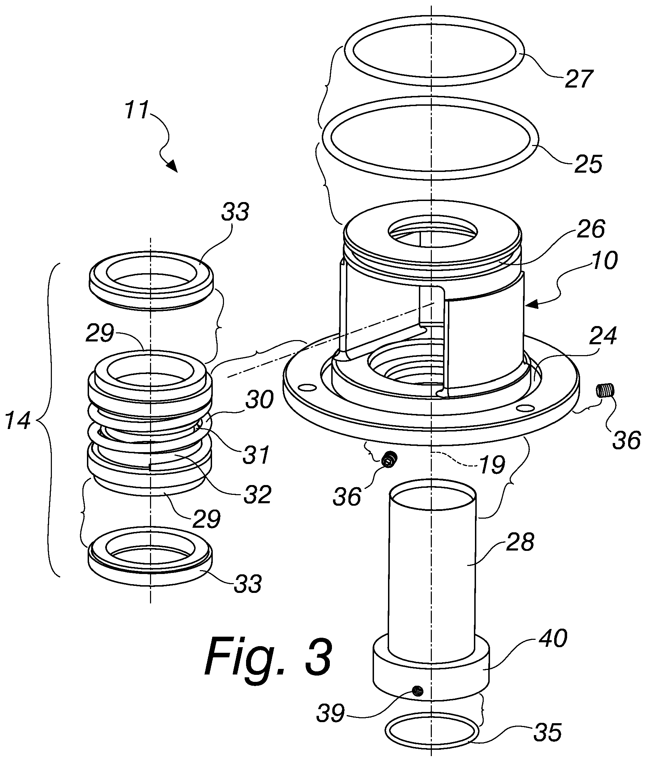

At the base of the flange 21, the cartridge 10 has a first circular groove 24, designated in Figure 3, in which a first gasket 25, of the O-ring type, is accommodated for hydraulic seal between the part of liquid pumped into the pump body 17 and the chamber 18. As mentioned previously, in the chamber 18 there is conveniently a lubricating fluid, such as for example oil, to ensure lubrication of the sliding tracks of the sealing rings.

The cartridge 10 has also a second circular groove 26, on the axially opposite side with respect to the flange 21, within which a second gasket 27, again of the O-ring type, is arranged for hydraulic seal between the chamber 18 and the dry region on the side of the motor 16.

Figures 2 and 3 are exploded views of the mechanical seal 11.

As clearly visible, the seal 11 comprises mainly the cartridge 10 described above, the mechanical sealing body 14 and a tubular jacket 28 on which the previous parts are assembled. In particular, the jacket 28 is inserted axially in the hollow body 13 and the mechanical sealing body 14 is mounted axially thereon and is inserted laterally in the cartridge 10 through a lateral window 20.

The mechanical seal 11 can be in fact installed in one piece (monolithically) on the transmission shaft 15, fitting thereon with the jacket 28.

The mechanical sealing body 14 comprises two first sealing rings 29 aligned along the axis 19, the same one around which the hollow body 13 of the cartridge 10 is extended, and also comprises axial pusher means 30 that separate them.

The axial pusher means 30 are constituted by a spring and each of the two first sealing rings 29 is provided with a bellows 31 made of plastic material, preferably made of elastomer and of a known type, and is covered by a collar 32 made of metallic material that protects it from the spring partially wound on it.

The two first sealing rings 29 are kept separated by the axial pusher means 30, pushing them against opposite second sealing rings 33 (forming the so-called sliding tracks) accommodated in the cartridge 10 at opposite end faces thereof 34, which are open for the coaxial insertion of the jacket 28 and for fitting on the transmission shaft 15. The axially opposite end faces 34 of the cartridge 10 both have, on the internal part of the cartridge 10, a seat within which a second sealing ring 33 is arranged.

The second sealing rings 33 are part of the mechanical sealing body 14, as indicated in the exploded views of Figure 2 and Figure 3, but when the mechanical seal 11 is assembled they are fixed and integral with the cartridge 10, while the first sealing rings 29 rotate with the axial pusher means 30.

Figures 2, 3 and 5 show a third gasket 35, also of the O-ring type, that is interposed between the transmission shaft 15, so as to surround it, and the jacket 28, from the internal part, in the lower part with respect to the drawing. The third gasket 35, like the first gasket 25, is used for hydraulic seal between the region wet by the pumped liquid and the chamber 18.

In the assembly of the mechanical seal 11, the cartridge 10 and the jacket 28 are rendered integral, since they are crossed simultaneously by elements 36 for connecting them at first transverse through holes 37 provided in a cartridge portion 38 and correspondingly in second transverse through holes 39 provided in a jacket portion 40. The cartridge portion 38 and the jacket portion 40 consist substantially of end portions of the two elements, the former protruding with respect to the flange 21.

In particular, as shown in the exploded views of Figure 2 and Figure 3, the connecting elements 36 consist of grub screws with a socket coupling in order to be screwed, that pass radially through the two parts, arranging themselves simultaneously in both at the cartridge portion 38 and at the jacket portion 40.

The connecting elements 36 are preset in order to be pushed, by screwing them, against the transmission shaft 15 beyond the cartridge 10 during the fitting of the mechanical seal 11, so as to create interference with it.

Use of the cartridge and of the mechanical seal, according to the invention, is as follows.

The assembly of the mechanical seal 11 occurs before its installation in the structure of the centrifugal pump 12.

First of all, the two second sealing rings 33 are inserted through one of the lateral windows 20 and pushed each into the respective seat at the end faces 34.

The remaining parts of the mechanical sealing body 14 are then inserted, while being mutually associated, in the hollow body 13 of the cartridge 10, also through one of the lateral windows 20, after compressing appropriately the spring of the axial pusher means 30.

The jacket 28 is introduced in the cartridge 10 through an end face 34, the lower one with respect to the drawings, entering the mechanical sealing body 14.

Also in the assembly of the mechanical seal 11, the cartridge 10 and the jacket 28 are rendered integral by applying the connecting elements 36.

Such elements, as mentioned, consist of grub screws that are inserted in the first through holes 37 and correspondingly in the second through holes 39.

The mechanical seal 11 can be thus fitted in an already assembled condition on the transmission shaft 15, fitting it thereon with the jacket 28.

The cartridge 10 is fixed to the pump body 17 by means of the fixing screws 22 at the flange 21 and the jacket 28 is released from the cartridge 10 by screwing the connecting elements 36 against the transmission shaft 15.

When the grub screws of the connecting elements 36 fix the jacket 28 to the transmission shaft 15, at the same time they release it from the coupling to the cartridge 10, allowing it to rotate integrally with the transmission shaft 15.

It should be noted that the mechanical sealing body 14 is inserted easily in the hollow body 13 from a lateral window 20 and is kept in place and in axial alignment with all of its elements by way of the insertion of the jacket 28, which, rendered integral with the cartridge 10, allows to fit it without positioning errors.

It should be also noted that the same connecting elements 36 allow to obtain two results, i.e., to render the cartridge 10 and the jacket 28 integral during the assembly of the mechanical seal 11 and, during installation, simply by screwing more deeply the grub screws, to release the jacket 28 from the cartridge 10, in order to render it integral with the transmission shaft 15 instead.

In practice it has been found that the invention achieves the intended aim and objects, by providing a mechanical seal that can be assembled and installed more easily and quickly than the mechanical cartridge seals of the known type, further reducing the possible positioning errors of the sealing rings.

Another important advantage of the mechanical seal according to the invention, comprising a cartridge according to the invention, is that it can be sold as a single product that is already assembled and therefore ready for installation during the production of the centrifugal pumps and during maintenance operations. In this manner, installation is easier and the assembly and maintenance times of the centrifugal pump are reduced considerably. In fact, thanks to the proposed solution, the installation of the mechanical seal requires substantially only to fix the cartridge by means of fixing screws and to screw the grub screws onto the transmission shaft in order to release the jacket from the cartridge and render it integral with the latter, with which it is intended to rotate.

The invention thus conceived is susceptible of numerous modifications and variations, all of which are within the scope of the appended claims; all the details may further be replaced with other technically equivalent elements.

In practice, the materials used, so long as they are compatible with the specific use. as well as the contingent shapes and dimensions, may be any according to requirements and to the state of the art.

## Claims

1. A cartridge (10) for a mechanical seal (11) for a centrifugal pump (12), provided with a hollow body (13) adapted to accommodate a mechanical sealing body (14) by means of which it can be installed, so as to surround it, on a shaft (15) for transmitting the rotation from a motor (16) to a pump body (17), the cartridge (10) being provided, in the vicinity of one of its axial end portions, with a flange (21) provided with fixing holes (23) for the passage of fixing screws (22) for fixing the cartridge (10) to the pump body (17), and with a cartridge portion (38) provided with first through holes (37) for the passage of connecting elements (36) for rendering said cartridge (10) integral with a jacket (28) substantially shaped like a tubular body, **characterised in that** the hollow body (20) has at least one lateral window (20) for the insertion therein of said mechanical sealing body (14).

2. A mechanical seal (11) comprising the cartridge (10) according to claim 1, **characterized in that** it comprises, coaxially and in succession from the outside:
- said cartridge (10),
- said mechanical sealing body (14),
- said jacket (28) substantially shaped like a tubular body, which is inserted axially in said hollow body (13) and on which said mechanical sealing body (14), inserted laterally in said cartridge (10) through said lateral window (20), is mounted axially.

3. The mechanical seal according to claim 2, **characterized in that** said cartridge (10) and said jacket (28) are rendered integral in the assembly of said mechanical seal (11), since they are crossed simultaneously and radially by said elements (36) for connecting them at said first through holes (37) provided in said cartridge portion (38) and correspondingly in second through holes (39) provided in a jacket portion (40), said connecting elements (36) being preset to be screwed on beyond said cartridge (10) against said transmission shaft (15) during the installation of said mechanical seal (11).

4. The mechanical seal according to claim 2, **characterized in that** said mechanical sealing body (14) comprises two first sealing rings (29), which are coaxial and are separated by axial pusher means (30) adapted to push them against opposite second sealing rings (33), which are coaxial to each other and to the preceding ones and are accommodated in said cartridge (10) at opposite end faces (34) thereof, which are open for the coaxial insertion of said jacket (28).

## Patentansprüche

1. Eine Kartusche (10) für eine mechanische Dichtung (11) für eine Kreiselpumpe (12), ausgestattet mit einem Hohlkörper (13), ausgebildet, um einen mechanischen Dichtungskörper (14) aufzunehmen, mit dessen Hilfe sie so, dass sie sie umgibt, auf einer Welle (15) zur Übertragung der Drehung von einem Motor (16) auf einen Pumpenkörper (17) installiert werden kann,
wobei die Kartusche (10) in der Nähe eines ihrer axialen Endabschnitte mit einem Flansch (21) ausgestattet ist, der mit Befestigungsbohrungen (23) für das Hindurchdringen von Befestigungsschrauben (22) zur Befestigung der Kartusche (10) am Pumpenkörper (17) versehen ist, und mit einem Kartuschenabschnitt (38), der mit ersten Durchgangsbohrungen (37) für das Hindurchdringen von Verbindungselementen (36) versehen ist, um die Kartusche (10) integral mit einem Gehäuse (28) zu machen, das im Wesentlichen wie ein rohrförmiger Körper geformt ist, **dadurch gekennzeichnet, dass** der Hohlkörper (20) mindestens ein Seitenfenster (20) zum Einsetzen des mechanischen Dichtungskörpers (14) dort hinein hat.

2. Eine mechanische Dichtung (11), die die Kartusche (10) gemäß Anspruch 1 umfasst, **dadurch gekennzeichnet, dass** sie, koaxial und von außen nach innen, Folgendes umfasst:
- die Kartusche (10),
- den mechanischen Dichtungskörper (14),
- das im Wesentlichen wie ein rohrförmiger Körper geformtes Gehäuse (28), das axial in den Hohlkörper (13) eingesetzt ist und auf dem der mechanische Dichtungskörper (14), seitlich durch das Seitenfenster (20) in die Kartusche (10) eingesetzt, axial installiert ist.

3. Die mechanische Dichtung gemäß Anspruch 2, **dadurch gekennzeichnet, dass** die Kartusche (10) und das Gehäuse (28) im Aufbau der mechanischen Dichtung (11) integral montiert werden, da sie gleichzeitig und radial von den Elementen (36) durchquert werden, um sie an den ersten Durchgangsbohrungen (37), die in dem Kartuschenabschnitt (38) angebracht sind, und entsprechend in zweiten Durchgangsbohrungen (39), die in einem Gehäuseabschnitt (40) angebracht sind, zu verbinden, wobei die Verbindungselemente (36) voreingestellt sind, um während der Installation der mechanischen Dichtung (11) über die Kartusche (10) hinaus auf die Übertragungswelle (15) aufgeschraubt zu werden.

4. Die mechanische Dichtung gemäß Anspruch 2, **dadurch gekennzeichnet, dass** der mechanische Dichtungskörper (14) zwei erste Dichtringe (29) umfasst, die koaxial und durch axiale Schubmittel (30) getrennt sind, ausgebildet, um sie gegen gegenüberliegende zweite Dichtringe (33) zu schieben, welche koaxial miteinander und mit den oben Genannten und in der Kartusche (10) an gegenüberliegenden Endflächen (34) derselben untergebracht sind, die zum koaxialen Einsetzen des Gehäuses (28) offen sind.

## Revendications

1. Cartouche (10) pour un joint mécanique (11) pour une pompe centrifuge (12), prévue avec un corps creux (13) adapté pour loger un corps d'étanchéité mécanique (14) au moyen duquel il peut être installé, afin de l'entourer, sur un arbre (15) pour transmettre la rotation d'un moteur (16) à un corps de pompe (17), la cartouche (10) étant prévue, à proximité de l'une de ses parties d'extrémité axiales, avec une bride (21) prévue avec des trous de fixation (23) pour le passage de vis de fixation (22) afin de fixer la cartouche (10) sur le corps de pompe (17), et avec une partie de cartouche (38) prévue avec des premiers trous débouchants (37) pour le passage des éléments de raccordement (36) pour rendre ladite cartouche (10) solidaire avec une chemise (28) sensiblement en forme de corps tubulaire, **caractérisée en ce que** le corps creux (20) a au moins un fenêtre latérale (20) pour y insérer ledit corps d'étanchéité mécanique (14).

2. Joint mécanique (11) comprenant la cartouche (10) selon la revendication 1, **caractérisé en ce qu'**il comprend de manière coaxiale et en succession à partir de l'extérieur :
ladite cartouche (10),
ledit corps d'étanchéité mécanique (14),
ladite chemise (28) sensiblement en forme de corps tubulaire, qui est insérée de manière axiale dans ledit corps creux (13) et sur laquelle ledit corps d'étanchéité mécanique (14), inséré latéralement dans ladite cartouche (10) à travers ladite fenêtre latérale (20), est monté de manière axiale.

3. Joint mécanique selon la revendication 2, **caractérisé en ce que** ladite cartouche (10) et ladite chemise (28) sont rendues solidaires lors de l'assemblage du joint mécanique (11), étend donné qu'elles sont traversées simultanément et radialement par lesdits éléments (36) pour les raccorder au niveau desdits premiers trous débouchants (37) prévus dans ladite partie de cartouche (38) et de manière correspondante dans des seconds trous débouchants (39) prévus dans une partie de chemise (40), lesdits éléments de raccordement (36) étant prédéterminés pour être vissés au-delà de ladite cartouche (10) contre ledit arbre de transmission (15) pendant l'installation dudit joint mécanique (11).

4. Joint mécanique selon la revendication 2, **caractérisé en ce que** ledit corps d'étanchéité mécanique (14) comprend deux bagues d'étanchéité (29) qui sont coaxiales et sont séparées par des moyens de poussoir axiaux (30) adaptés pour les pousser contre des secondes bagues d'étanchéité (33) opposées, qui sont coaxiales entre elles, et par rapport aux précédentes et sont logées dans ladite cartouche (10) au niveau de ses faces d'extrémité (34) opposées, qui sont ouvertes pour l'insertion coaxiale de ladite chemise (28).
